# FASCICULE DE BREVET EUROPEEN

(11) **EP 2 612 489 B1**
(45) Date de publication et mention de la délivrance du brevet: **31.05.2017**
(21) Numéro de dépôt: 11761677.1
(22) Date de dépôt: 29.08.2011
(51) Int. Cl.: H04M 1/04, B60R 11/02

(54) **SUPPORT POUR TERMINAL MOBILE POUVANT RECEVOIR DES TERMINAUX MOBILES DE DIFFÉRENTE DIMENSIONS**
STÜTZE FÜR EIN MOBILES ENDGERÄT FÜR DIE AUFNAHME VON MOBILEN ENDGERÄTEN UNTERSCHIEDLICHER GRÖSSEN
SUPPORT FOR MOBILE TERMINAL, THAT CAN RECEIVE MOBILE TERMINALS OF DIFFERENT DIMENSIONS

(30) Priorité: 30.08.2010 FR 1056857
(43) Date de publication de la demande: 10.07.2013
(73) Titulaire: Faurecia Intérieur Industrie, 92000 Nanterre (FR)
(72) Inventeur: DA COSTA PITO, Sergio, F-95800 Cergy (FR); BRANCHERIAU, Christian, F-95220 Herblay (FR); BRUNARD, Christophe, F-92270 Bois Colombes (FR)
(74) Mandataire: Lavoix
(86) Numéro de dépôt international: PCT/FR2011/051975
(87) Numéro de publication internationale: WO 2012/028812

(56) Documents cités:
- EP-A1- 0 980 792
- DE-A1- 19 624 525
- DE-U1- 29 912 359
- US-A- 5 588 055
- US-A1- 2007 022 582

## Description

La présente invention concerne un support pour terminal mobile tel qu'un téléphone mobile ou un ordiphone, le terminal étant de forme générale parallélépipédique allongée comprenant deux faces opposées encadrées par des bords, le support étant du type comprenant un socle délimitant un espace ouvert de réception d'un terminal mobile, le socle comprenant une surface d'appui plane prévue pour servir d'appui pour une face du terminal mobile et une cavité de réception d'un bord du terminal mobile.

Un tel support est par exemple destiné à retenir un ordiphone à un tableau de bord de véhicule automobile de façon à ce que l'ordiphone soit facilement accessible au conducteur du véhicule.

De tels supports sont connus par exemple de US 2007/022582 A1, EP 0 980 792 A1 et DE 299 12 359 U1

Dans de tels supports, il est important de gérer les différents degrés de liberté afin que le terminal mobile soit correctement retenu, notamment en cas de choc frontal ou latéral. Par ailleurs, il est souhaitable qu'un tel support soit compatible avec différents modèles de terminaux mobiles. Il convient donc de fabriquer des supports universels, adaptés pour gérer les différentes hauteurs, largeurs et épaisseurs possibles des terminaux mobiles.

US 2008/0203260 décrit un support universel pour téléphone mobile, comprenant une base et des pattes latérales élastiques adaptées pour appuyer contre des bords du téléphone de façon à maintenir celui-ci en appui contre la base. Les pattes latérales s'adaptent à des terminaux mobiles de largeurs et d'épaisseurs différentes.

Un tel support n'offre cependant pas entière satisfaction. En effet, les pattes gênent l'accès à la face avant du téléphone.

Un but de l'invention est donc de fournir un support universel pour terminal mobile, permettant de gérer notamment les variations de largeur et d'épaisseur de terminaux mobiles, tout en laissant un accès dégagé à la face avant du terminal mobile et tout en améliorant les performances vibratoires et de sécurité d'un tel type de support universel.

A cet effet, l'invention a pour objet un support du type précité, caractérisé en ce que la cavité est délimitée entre une région périphérique de la surface d'appui et une surface de butée plane prévue pour servir d'appui au bord du terminal mobile suivant une direction longitudinale, la surface de butée étant en regard de la surface d'appui et inclinée par rapport à la surface d'appui en formant un angle aigu avec la surface d'appui.

Le support selon l'invention peut également comprendre l'une ou plusieurs des caractéristiques suivantes, prise(s) isolément ou suivant toute(s) combinaison(s) techniquement possible(s) :
- l'angle aigu a une valeur comprise entre 20° et 70°, de préférence comprise entre 30° et 60° ;
- le socle comprend une coque extérieure rigide et un revêtement intérieur souple, le revêtement intérieur comprenant une portion définissant la surface de butée ;
- la coque extérieure est monobloc ;
- la surface de butée est striée ;
- le support comprend un dispositif de retenue latérale du terminal mobile.
- le dispositif de retenue latérale comprend au moins une lame ressort, la ou chaque lame comportant une extrémité fixe fixée sur le socle à la périphérie de l'espace et une extrémité libre, la lame s'étendant vers l'intérieur de l'espace de réception à partir de son extrémité fixe ;
- à l'état libre, la ou chaque lame s'étend obliquement vers l'intérieur de l'espace et vers la cavité ;
- le support comprend des organes de fixation à un tableau de bord de véhicule automobile ; et
- le support comporte un dispositif de retenue pour retenir un bord d'un terminal mobile disposé dans l'espace, opposé au bord du terminal mobile reçu dans la cavité ;

L'invention a également pour objet un ensemble comprenant un support tel que défini ci-dessus et un terminal mobile insérable dans le support.

L'invention a en outre pour objet un véhicule automobile comprenant un support tel que défini ci-dessus.

Des caractéristiques et avantages supplémentaires apparaîtront à la lecture de la description qui va suivre, donnée uniquement à titre d'exemple et faite en se référant aux dessins annexés, sur lesquels :
- la Figure 1 est une vue en perspective d'un support selon l'invention ;
- la Figure 2 est une vue de face partielle du support de la figure 1 ; et
- la Figure 3 est une vue en coupe partielle du support selon le plan III-III sur la Figure 2.

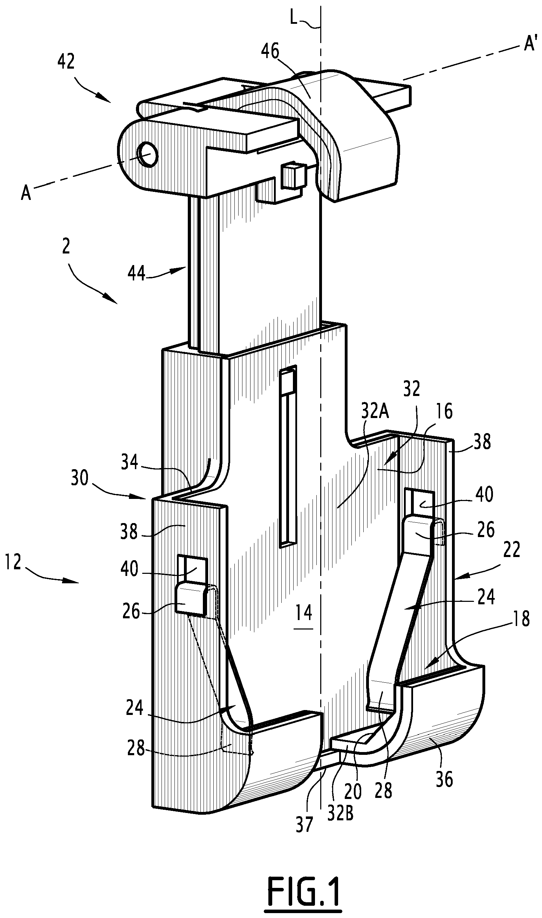

Le support 2 de terminal mobile représenté sur les Figures 1 à 3 est propre à recevoir des terminaux mobiles de différentes dimensions. Un tel support 2 est généralement dit « universel » du fait qu'il peut recevoir différentes modèles de terminaux mobiles.

Un terminal mobile est typiquement un téléphone mobile ou un ordiphone (terminal plus généralement connu sous le terme anglais de « smartphone »).

Un terminal mobile possède généralement une forme parallélépipédique allongée et comprend deux faces opposées encadrées par des bords. Un terminal mobile possède une longueur correspondant à sa dimension suivant ses bords les plus long, une largeur correspondant à sa dimension suivant ses autres bords et une épaisseur.

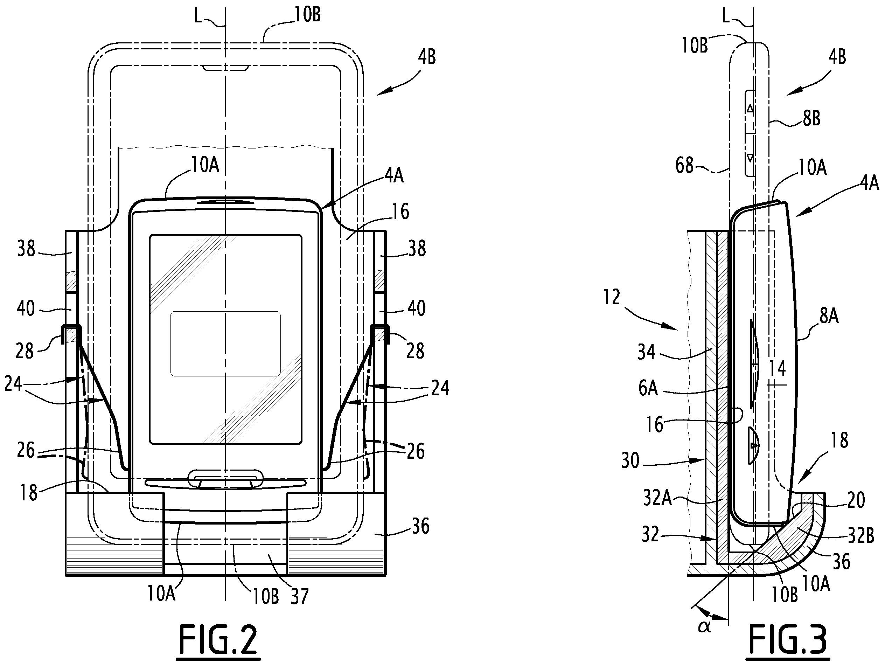

Sur les Figures 2 et 3, deux terminaux mobiles de dimensions différentes ont été représentés. Ils seront référencés par la suite en utilisant le suffixe « A » et « B » pour les distinguer. Les terminaux mobiles 4A, 4B possèdent une forme parallélépipédique allongée et comprennent chacun deux faces opposées 6A, 8A, 6B, 8B encadrées par des bords 10A, 10B. Le premier terminal mobile 4A (en traits plein) est moins long, moins large et plus épais que le deuxième terminal mobile 4B (en traits mixtes).

Comme visible sur les Figures 1 et 3, le support 2 comprend un socle 12 de réception d'un terminal mobile 4A, 4B. Le socle 12 délimite un espace 14 ouvert de réception d'un terminal mobile 4A, 4B. Le socle 12 comprend une surface d'appui 16 délimitant l'espace 14 et prévue pour servir d'appui à une face 6A, 6B d'un terminal mobile 4A, 4B. L'espace 14 est ouvert en regard de la surface d'appui 16. Le socle 12 comprend une cavité 18 de positionnement prévue pour recevoir un bord inférieur 10A, 10B d'un terminal mobile 4A, 4B reçu dans le socle 12. En d'autres termes, le socle 12 est propre à recevoir un terminal mobile 4A, 4B en appui par une face 6A, 6B contre la surface d'appui 16, avec un bord inférieur 10A, 10B engagé dans la cavité 18 et en appui dans la cavité 18 suivant une direction longitudinale L.

La surface d'appui 16 est sensiblement plane. La cavité 18 est délimitée entre une région périphérique de la surface d'appui 16 et une surface de butée 20 sensiblement plane et située en regard de la surface d'appui 16 en étant inclinée par rapport à la surface d'appui 16 et en définissant avec la surface d'appui 16 un angle aigu α (Figure 3). La surface d'appui 16 et la surface de butée 20 confèrent à la cavité 18 une forme trapézoïdale (Figure 3) convergeant vers le fond de la cavité 18 et divergeant vers l'espace 14. L'angle aigu est compris entre 20° et 70°, de préférence entre 30° et 60°.

La surface d'appui 16 et la surface de butée 20 sont définie sur des parties du socles 12 fixes l'une par rapport à l'autre, et sont donc elles-mêmes fixes l'une par rapport à l'autre.

Comme visible sur les Figures 1 et 2, le support 2 comprend un dispositif de retenue latérale 22 pour maintenir une terminal mobile 4A, 4B reçu dans le socle 12 transversalement à la direction longitudinale L d'appui du terminal mobile 4A, 4B contre la surface de butée 20.

Le dispositif de retenue latérale 22 comprend entre autre deux lames 24 formant ressort disposées pour venir chacune en appui sur un bord latéral respectif d'un terminal mobile 4A, 4B reçu dans le socle 12.

Chaque lame 24 comprend une extrémité fixe 26 fixée sur le socle 12 à la périphérie de l'espace 14 et une extrémité libre 28, chaque lame 24 s'étendant à l'état libre à partir de son extrémité fixe 26 vers l'intérieur de l'espace 14.

Les extrémités libres 28 des lames 24 délimitent entre elles un passage pour un terminal mobile 4A, 4B. Les lames 24 sont prévues pour venir en contact avec les bords latéraux d'un terminal mobile 4A, 4B et pour s'écarter mutuellement en se déformant élastiquement lors de l'insertion du terminal mobile 4A, 4B. La zone de contact des extrémités libres 28 des lames 24 sur les bords latéraux du terminal mobile 4A, 4B s'étend de 5 mm au dessus du bord inférieur 10A, 10B jusqu'à la moitié de la hauteur du terminal mobile 4A, 4B. Cette localisation du contact de l'extrémité des lames sur la moitié inférieure des bords latéraux du terminal mobile permet de conserver un accès dégagé au terminal mobile ainsi qu'aux boutons de commandes éventuellement situés sur les bords latéraux.

Les portions des lames 24 destinées à venir en contact avec le terminal mobile 4A, 4B sont de préférence revêtues d'un revêtement élastomère.

Comme visible sur les Figures 1 et 3, le socle 12 comprend une coque 30 extérieure et un revêtement 32 intérieur.

La coque 30 est rigide et de préférence monobloc. Elle comprend une base 34 le long de laquelle est définie la surface d'appui 16 et un rebord 36 transversal s'étendant en saillie à partir de la base 30, la cavité 18 étant délimitée entre la base 34 et le rebord 36.

Le rebord 36 présente une encoche 37 (Figure 1) ménagée dans un bord libre du rebord 36 et séparant le rebord 36 en deux parties latérales. L'encoche 37 permet de dégager la partie centrale du bord d'un terminal reçu dans le socle 12. Cette encoche 37 permet avantageusement de libérer l'accès à la zone de connexion du terminal mobile avec un chargeur de batterie ou tout autre accessoire, cette zone étant généralement située au milieu de la surface portant le bord 10A, 10B en fonction des modèles. Cette encoche 37 permet en outre de localiser la surface du butée 20 aux deux coins inférieurs du terminal mobile 4A, 4B, libérant ainsi l'accès aux boutons de commande.

Le revêtement 32 est souple, typiquement un matériau élastomère naturel, par exemple du caoutchouc ou synthétique du type TPE-Thermoplastique Elastomère, par exemple un EPDM. Le revêtement 32 permet avantageusement de réduire les bruits et d'amortir les vibrations entre le terminal mobile et son support. Il recouvre les faces internes de la base 34 et du rebord 36 tournées vers l'espace 14. La surface d'appui 16 est définie sur la portion 32A du revêtement 32 recouvrant la base 34, et la surface de butée 20 est définie sur la portion 32B du revêtement 32 recouvrant le rebord 36.

Dans l'exemple illustré, le rebord 36 de la coque 30 présente une forme arrondie, et le revêtement 32 présente un pan définissant la surface de butée 20.

La surface de butée 20 est lisse. En variante, la surface de butée est munie de stries transversales, tout en conservant une forme générale plane ou légèrement concave.

La coque 30 comprend deux parois latérales 38 encadrant latéralement l'espace 14. Les lames 24 sont fixées sur les parois latérales 38 par sertissage de leurs extrémités fixes 26 dans des lumières 40 ménagées dans les parois latérales 38. Le dispositif de retenue latérale 22, composé des lames 24 formant ressort et des parois latérales 38, permet ainsi avantageusement de retenir de manière robuste le terminal mobile en cas de choc latéral. En effet, les lames 24 forment un dispositif de retenue souple complété par la paroi latérale 38 rigide. Le revêtement 32 ne s'étend pas sur les parois latérales 38.

Comme visible sur la Figure 1, le support 2 comprend en outre un dispositif de retenue 42 pour retenir un bord d'un terminal mobile 4A, 4B opposé au bord du terminal mobile 4A, 4B engagé dans la cavité 18. Le dispositif de retenue 42 comprend un bras 44 télescopique et une patte 46 de retenue.

Le bras 44 est monté coulissant sur le socle 12 suivant la direction longitudinale L. Le dispositif de retenue 42 peut comprendre des moyens de maintien du bras 44 dans une position déterminée, par exemple sous la forme d'une crémaillère prévue sur l'un du bras 44 et du socle 12 et d'une dent de blocage prévue sur l'autre.

La patte 46 est montée pivotante autour d'un axe A-A' à l'extrémité libre du bras 44 opposée au socle 12. L'axe A-A' est perpendiculaire à la direction longitudinale L et parallèle à la surface d'appui 16. La patte 46 est mobile entre une position écartée dans laquelle elle est pivotée vers l'extérieur de l'espace 14 et une position rabattue dans laquelle elle est pivotée vers l'intérieur de l'espace 14.

La patte 46 présente une extrémité libre 48 recourbée pour agripper un bord 10A, 10B d'un terminal mobile 4A, 4B reçu dans l'espace 14 opposé au bord 10A, 10B reçu dans la cavité 18 lorsque la patte 46 est rabattue sur ledit bords 10A, 10B.

La patte 46 est de préférence revêtue sur une face interne destinée à venir en contact avec le terminal mobile d'un revêtement 50 en élastomère.

En fonctionnement, en références aux Figures 1 à 3, un terminal mobile 4A, 4B est inséré dans le socle 12 en engageant un bord 10A, 10B du terminal mobile dans la cavité 18 et en appliquant une face 6A, 6B du terminal mobile 4A, 4B contre la surface d'appui 16. Le terminal mobile 4A, 4B repose en appui par son bord 10A, 10B contre la surface de butée 20.

Le terminal mobile 4A, 4B s'appuie sur la surface de butée 20 parallèlement à la surface d'appui 16. Du fait de l'inclinaison de la surface de butée 20, celle-ci exerce par réaction sur le bord 10A, 10B du terminal mobile 4A, 4B un effort dirigé en direction de la surface d'appui 16. Il en résulte que le terminal mobile 4A, 4B est calé contre la surface d'appui 16. Le terminal mobile 4A, 4B est ainsi maintenu fermement.

La cavité 18 de forme trapézoïdale, définie entre une région périphérique de la surface d'appui 16 et une surface de butée 20 inclinée, permet de recevoir des terminaux mobiles 4A, 4B de différentes épaisseurs et de formes variées. Comme visible sur la figure 3, un terminal mobile 4A moins épais s'enfonce plus dans la cavité 18 qu'un terminal mobile 4B plus épais, jusqu'à venir en appui contre la surface de butée 20 suivant la direction longitudinale L.

La forme de la cavité 18 permet d'assurer un calage des terminaux mobiles 4A, 4B avec la même efficacité malgré leurs épaisseurs différentes. Le calage des terminaux est obtenu simplement et de manière robuste puisqu'il résulte de la forme de la cavité 18 définie entre une surface d'appui 16 et une surface de butée 20 définies sur des parties du socle 12 fixes l'une par rapport à l'autre.

L'angle aigu compris entre 20° et 70° et de préférence entre 30° et 60° permet de recevoir dans le socle des terminaux mobiles d'épaisseurs très différentes tout en assurant un calage satisfaisant des terminaux mobiles.

Les lames 24 en appui sur les bords des terminaux mobiles 4A, 4B centrent latéralement les terminaux mobiles 4A, 4B du fait de l'équilibrage se produisant entre les efforts exercés par les lames 24. Les lames 24 disposées obliquement et convergeant vers la cavité 18 permettent une insertion facile des terminaux mobiles 4A, 4B entre les lames 24. Les lames 24 s'écartent en fonction de la largeur du terminal 4A, 4B, comme illustré sur la Figure 2 où les lames sont représentées dans une position faiblement écartement (traits pleins) de réception d'un terminal mobile 4A de faible largeur, et une position plus écartée (traits mixtes) de réception d'un terminal mobile 4B plus large. Les lames 24 constituent un dispositif simple et fiable de centrage, permettant de recevoir des terminaux mobiles 4A, 4B de différentes largeurs. Le dispositif de centrage permet ainsi avantageusement de positionner la zone de connexion du terminal mobile en regard de l'encoche 37.

Le dispositif de retenue 42 permet de maintenir l'extrémité du terminal mobile 4A, 4B qui n'est pas engagée dans la cavité 18 et agrippant cette extrémité à l'aide de la patte 46. Le coulissement du bras 44 et le pivotement de la patte 46 permettent d'adapter le support 2 à des terminaux mobiles 4A, 4B de formes et de longueurs différentes.

Grâce à l'invention, le support est adapté pour maintenir étroitement des terminaux mobiles dont les dimensions en épaisseur, largeur et longueur sont variables, tout en maintenant la face avant des terminaux mobiles dégagée, par exemple pour lire un écran d'affichage et/ou de commande ou accéder à des boutons de commande.

L'invention n'est pas limitée au mode de réalisation décrit ci-dessus.

Le support 2 ne comprend pas nécessairement un revêtement intérieur. Dans une variante, le socle 12 est dépourvu de revêtement intérieur et la surface d'appui 16 et la surface de butée 20 sont définies sur la coque 30.

Le support 2 peut être dépourvu de dispositifs de retenue et comprendre uniquement un socle 12.

D'autres moyens de retenue latérale du terminal mobile sont envisageables, sans départir du cadre de l'invention.

Il est à noter que le dispositif de retenue latérale présenté est avantageux en tant que tel, indépendamment des autres caractéristiques du support.

Ainsi, l'invention concerne également de manière générale un support pour terminal mobile tel qu'un ordiphone, du type comprenant un socle délimitant un espace de réception du terminal mobile s'étendant suivant une direction longitudinale, le support comprenant un dispositif de retenue latérale du terminal mobile comprenant au moins une lame ressort, la ou chaque lame ressort comportant une extrémité fixe fixée à la périphérie de l'espace et une extrémité libre, la ou chaque lame s'étend vers l'intérieur de l'espace à partir de son extrémité libre.

Le support selon l'invention est par exemple destiné à la fixation de terminaux mobiles dans un véhicule automobile.

## Revendications

1. Support (2) pour terminal mobile tel qu'un téléphone mobile ou un ordiphone, le terminal étant de forme générale parallélépipédique allongée comprenant deux faces opposées encadrées par des bords, le support étant du type comprenant un socle (12) délimitant un espace (14) ouvert de réception d'un terminal mobile, le socle comprenant une surface d'appui (16) plane prévue pour servir d'appui pour une face du terminal mobile et une cavité (18) de réception d'un bord du terminal mobile, la cavité (18) étant délimitée entre une région périphérique de la surface d'appui (16) et une surface de butée (20) prévue pour servir d'appui au bord du terminal mobile suivant une direction longitudinale (L), le support (2) comprenant également un dispositif (22) de retenue latérale du terminal mobile, adapté pour maintenir le terminal mobile reçu dans le socle (12) transversalement à la direction longitudinale (L) d'appui du terminal mobile contre la surface de butée (20), **caractérisé en ce que** la surface de butée (20) est plane et disposée en regard de la surface d'appui (16) en étant inclinée par rapport à la surface d'appui (16) et en formant un angle aigu avec la surface d'appui (16), et **en ce que** le dispositif de retenue latérale (22) comprend au moins une lame (24) ressort, la ou chaque lame (24) comportant une extrémité fixe (26) fixée sur le socle (12) à la périphérie de l'espace (14) et une extrémité libre (28), la lame (24) s'étendant vers l'intérieur de l'espace de réception à partir de son extrémité fixe (26) et étant disposée pour venir en appui sur un bord latéral du terminal mobile.

2. Support (2) selon la revendication 1, dans lequel l'angle aigu a une valeur comprise entre 20° et 70°, de préférence comprise entre 30° et 60°.

3. Support (2) selon la revendication 1 ou 2, dans lequel le socle (12) comprend une coque extérieure (30) rigide et un revêtement intérieur (32) souple, le revêtement intérieur comprenant une portion définissant la surface de butée (20).

4. Support (2) selon la revendication 3, dans lequel la coque extérieure (30) est monobloc.

5. Support (2) selon la revendication 3 ou 4, dans lequel la surface de butée (20) est striée.

6. Support (2) selon l'une quelconque des revendications précédentes, dans lequel, à l'état libre, la ou chaque lame (24) s'étend obliquement vers l'intérieur de l'espace (14) et vers la cavité (18).

7. Support (2) selon l'une quelconque des revendications précédentes, **caractérisé en ce qu'**il comprend des moyens de fixation à un tableau de bord de véhicule automobile.

8. Support (2) selon l'une quelconque des revendications précédentes, **caractérisé en ce qu'**il comporte un dispositif de retenue (42) pour retenir un bord d'un terminal mobile disposé dans l'espace (14), opposé au bord du terminal mobile reçu dans la cavité (18).

9. Ensemble comprenant un support (2) selon l'une quelconque des revendications précédentes et un terminal mobile insérable dans le support.

10. Véhicule automobile comprenant un support selon l'une quelconque des revendications précédentes.

## Patentansprüche

1. Halter (2) für ein mobiles Endgerät, wie beispielsweise ein Mobiltelefon oder ein Smartphone, wobei das Endgerät von einer im Allgemeinen langgestreckten parallelepipedischen Form ist, welche zwei entgegengesetzte Flächen, die mittels Rändern eingefasst sind, aufweist, wobei der Halter vom Typ ist, der einen Sockel (12), welcher einen offenen Raum (14) zur Aufnahme eines mobilen Endgeräts begrenzt, aufweist, wobei der Sockel (12) eine plane Abstützfläche (16), die dazu vorgesehen ist, als Abstützung für eine Fläche des mobilen Endgeräts zu dienen, und eine Aussparung (18) zur Aufnahme eines Rands des mobilen Endgeräts aufweist, wobei die Aussparung (18) einer Längsrichtung (L) nach zwischen einem Umfangsbereich der Abstützfläche (16) und einer Anschlagfläche (20), die dazu vorgesehen ist, als Auflage für einen Rand des mobilen Endgeräts zu dienen, begrenzt ist, wobei der Halter (2) außerdem eine Vorrichtung (22) zum lateralen Festhalten des mobilen Endgeräts aufweist, welche dazu eingerichtet ist, das mobile Endgerät, das in dem Sockel (12) aufgenommen ist, quer zur Längsrichtung (L) zu halten zur Anlage des mobilen Endgeräts gegen die Anschlagfläche (20), **gekennzeichnet dadurch, dass** die Anschlagfläche (20) plan ist und der Abstützfläche (16) gegenüberliegend angeordnet ist, wobei sie bezüglich der Abstützfläche (16) geneigt ist und einen spitzen Winkel mit der Abstützfläche (16) bildet, und dadurch, dass die Vorrichtung zum lateralen Festhalten (22) wenigstens ein Federblatt (24) aufweist, wobei das oder jedes Blatt (24) ein festes Ende (26), das an dem Sockel (12) mit dem Umfang des Raums (14) fixiert ist, und ein freies Ende (26) aufweist, wobei das Blatt (24) sich von seinem festen Ende (26) aus hin zum Inneren des Raums zur Aufnahme erstreckt und angeordnet ist, um in Anlage an einem lateralen Rand des mobilen Endgeräts zu kommen.

2. Halter (2) gemäß dem Anspruch 1, wobei der spitze Winkel einen Wert zwischen 20° und 70°, bevorzugt zwischen 30° und 60°, hat.

3. Halter (2) gemäß Anspruch 1 oder 2, wobei der Sockel (12) ein steifes Außengehäuse (30) und eine nachgiebige Innenauskleidung (32) aufweist, wobei die Innenauskleidung einen Teil der Anschlagfläche (20) definiert.

4. Halter (2) gemäß Anspruch 3, wobei das Außengehäuse (30) einstückig ist.

5. Halter (2) gemäß Anspruch 3 oder 4, wobei die Anschlagfläche (20) geriffelt ist.

6. Halter (2) gemäß irgendeinem der vorhergehenden Ansprüche, wobei sich das oder jedes Blatt (24) in einem freien Zustand schräg hin zum Raum (14) und hin zur Aussparung (18) erstreckt.

7. Halter (2) gemäß irgendeinem der vorhergehenden Ansprüche, **gekennzeichnet dadurch, dass** er Mittel zum Befestigen an einem Armaturenbrett eines Kraftfahrzeugs aufweist.

8. Halter (2) gemäß irgendeinem der vorhergehenden Ansprüche, **gekennzeichnet dadurch, dass** er aufweist eine Haltevorrichtung (42) zum Festhalten eines in dem Raum (14) angeordneten Rands des mobilen Endgeräts, welcher dem in der Aussparung (18) aufgenommenen Rand des mobilen Endgeräts gegenüberliegt.

9. Anordnung, aufweisend einen Halter (2) gemäß irgendeinem der vorhergehenden Ansprüche und ein in den Halter einsetzbares mobiles Endgerät.

10. Kraftfahrzeug, aufweisend einen Halter (2) gemäß irgendeinem der vorhergehenden Ansprüche.

## Claims

1. A holder (2) for a mobile terminal, such as a mobile telephone or a smart phone, said terminal being of a general extended parallelepiped shape comprising two opposite faces surrounded by edges, said holder being of the type comprising a base (12) delimiting an open space (14) for receiving a mobile terminal, said base comprising a flat support surface (16) designed to act as a support for a face of said mobile terminal and a cavity (18) for receiving an edge of said mobile terminal, said cavity (18) being delimited between a peripheral region of said support surface (16) and a stop surface (20) designed to act as a support for the edge of said mobile terminal in a longitudinal direction (L), said holder (2) further comprising a device (22) for laterally retaining said mobile terminal, which device is adapted to hold said mobile terminal received in said base (12) transversely to said longitudinal support direction (L) of said mobile terminal against said stop surface (20), **characterised in that** said stop surface (20) is flat and is disposed facing said support surface (16) by being inclined relative to said support surface (16) and by forming an acute angle with said support surface (16), and **in that** said lateral retention device (22) comprises at least one leaf spring (24), the one or each leaf spring (24) comprising a fixed end (26) attached to said base (12) on the periphery of said space (14) and a free end (28), said leaf spring (24) extending towards the inside of said reception space from its fixed end (26) and being disposed in order to come to bear against a lateral edge of said mobile terminal.

2. The holder (2) according to claim 1, wherein the value of said acute angle is between 20° and 70°, preferably between 30° and 60°.

3. The holder (2) according to claim 1 or 2, wherein said base (12) comprises a rigid external shell (30) and a flexible internal coating (32), said internal coating comprising a portion defining said stop surface (20).

4. The holder (2) according to claim 3, wherein said external shell (30) is one piece.

5. The holder (2) according to claim 3 or 4, wherein said stop surface (20) is ribbed.

6. The holder (2) according to any one of the preceding claims, wherein, in the free state, the one or each leaf spring (24) extends slantwise towards the inside of said space (14) and towards said cavity (18).

7. The holder (2) according to any one of the preceding claims, **characterised in that** it comprises means for attaching to a dashboard of a motor vehicle.

8. The holder (2) according to any one of the preceding claims, **characterised in that** it comprises a retention device (42) for retaining an edge of a mobile terminal disposed in said space (14), opposite the edge of said mobile terminal that is received in said cavity (18).

9. An assembly comprising a holder (2) according to any one of the preceding claims and a mobile terminal that can be inserted into said support.

10. A motor vehicle comprising a holder according to any one of the preceding claims.
